# FASCICULE DE BREVET EUROPEEN

(11) **EP 0 769 317 B1**
(45) Date de publication et mention de la délivrance du brevet: **16.01.2002**
(21) Numéro de dépôt: 96410107.5
(22) Date de dépôt: 16.10.1996
(51) Int. Cl.: B01D 29/21

(54) **Cartouche de filtrage à âme tubulaire rigide**
Patronenfilter mit einem starren rohrartigen Dorn
Cartridge filter with a rigid tubular core

(30) Priorité: 20.10.1995 FR 9512599
(43) Date de publication de la demande: 23.04.1997
(73) Titulaire: SOCIETE SIEBEC, 38600 Fontaine (FR)
(72) Inventeur: Villette, Guy, 06460 Saint Vallier de Thiey (FR); Terracol, Claude, 38320 Brie Angonnes (FR)
(74) Mandataire: Hecké, Gérard

(56) Documents cités:
- EP-A- 0 391 648
- DE-A- 2 005 051
- FR-A- 1 444 394
- US-A- 3 246 766

## Description

L'invention est relative à une cartouche de filtrage cylindrique comportant une âme centrale tubulaire, un média filtrant en papier ou en un matériau analogue plissé, qui est disposé circonférentiellement autour de l'âme en étant maintenu par cette âme, et des embases, indépendantes de l'âme, qui coiffent le fond supérieur et le fond inférieur du média filtrant en l'encadrant.

Une cartouche du genre mentionné, par exemple utilisée pour le filtrage de l'eau d'une piscine, peut être facilement retirée de la cuve du filtre pour être nettoyée ou remplacée, lorsqu'elle est colmatée. Le coût de fabrication est relativement important et il pèse lourdement dans les frais d'exploitation de la piscine. La cartouche usée est mise au rebut et elle contribue ainsi à la pollution de l'environnement.

Le document FR-A-1 444 394 décrit un filtre comprenant deux pièces support séparables l'un de l'autre en forme d'auge annulaire, qui assurent la fonction d'embase et d'âme centrale.

La présente invention a pour but de permettre la réalisation d'une cartouche, dont certaines parties sont facilement récupérables et réutilisables, d'autres parties pouvant être compactées en vue de leur élimination après utilisation.

La cartouche selon l'invention est caractérisée en ce que l'âme est en matière plastique moulée rigide, que le média filtrant et les embases sont solidarisés pour constituer un ensemble monobloc et que l'âme est séparable de cet ensemble monobloc par un coulissement axial à travers un orifice central, ménagé dans l'embase inférieure et ayant une section supérieure à celle de l'âme.

L'âme confère à la cartouche une rigidité suffisante pour une manipulation et/ou un nettoyage au jet sous pression sans précaution particulière. Lorsque la cartouche est usée, en l'occurrence lorsque le média filtrant est colmaté ou détérioré, l'âme peut être séparée et réutilisée pour une autre cartouche. Selon les conditions d'exploitation cette réutilisation est opérée sur place ou éventuellement en usine ou chez le distributeur. Les autres parties de la cartouche sont souples et facilement compactables pour la mise au rebut ou le recyclage.

L'âme est récupérée et son coût n'est plus un facteur déterminant. Elle est réalisée en une pièce moulée, de préférence sous la forme d'un empilage de pièces moulées, élaborée pour un maintien efficace du média filtrant et une perte de charge minimale de l'écoulement du fluide filtré.

Selon un développement de l'invention, l'âme comporte à sa surface externe cylindrique une alternance de gorges circulaires et de saillies circulaires en forme d'anneaux, dimensionnées de façon à ménager un passage important pour le fluide filtré tout en assurant un maintien correct du média filtrant, de telle sorte que celui-ci ne pénètre pas excessivement dans les gorges quand il tend à se déformer sous l'action d'une différence de pression entre l'extérieur et l'intérieur de la cartouche et qu'il existe une possibilité de coulissement axial entre le média filtrant et l'âme, même après utilisation, en vue de pouvoir séparer ces deux éléments l'un de l'autre. Un filtre en papier plissé pour de l'eau, a par exemple des gorges d'une profondeur d'environ 3 millimètres et d'une largeur d'environ 6 millimètres, séparées par des saillies d'environ 3 millimètres de large. Ces dimensions dépendent bien entendu de la rigidité du média filtrant et de l'âme et des pressions en jeu.

Les gorges communiquent avantageusement entre elles par des lumières en forme de canaux à orientation axiale, pratiqués dans la paroi de l'âme du côté des fonds des gorges. Dans l'exemple d'un filtre pour piscine, ces canaux de section rectangulaire ont une profondeur radiale d'environ 4 millimètres et ils s'étendent jusqu'aux extrémités de l'âme ou, dans le cas d'une âme en plusieurs éléments, jusqu'aux interfaces ou plans de jonction des éléments, où sont ménagés des passages vers le volume interne de l'âme.

Selon une variante de réalisation les saillies circulaires sont portées par des ailettes radiales solidaires et réparties régulièrement autour d'un tube central. Les gorges communiquent avec les canaux axiaux confinés par les ailettes pour un libre écoulement du fluide filtré.

Selon une autre variante de réalisation, les saillies circulaires sont agencées sur le pourtour externe d'un cylindre creux, dont la paroi présente une ou plusieurs fentes longitudinales ménageant des passages vers l'intérieur du cylindre. Des ailettes radiales relient le cylindre à un tube central de support.

L'empilage d'éléments standard permet la réalisation d'âmes de tailles différentes à partir d'un moule unique. L'accrochage de deux éléments adjacents est assuré par des languettes déformables portées par une face d'un élément, s'engageant dans des trous pratiqués dans l'autre face de l'élément voisin, et venant s'accrocher de façon irréversible sur une aspérité prévue à cet effet,par exemple le bord de la première saillie circulaire portée par cet élément. Le positionnement correct est avantageusement assuré par des plots coniques, portés par une face d'un élément et s'engageant dans des logements correspondants portés par l'autre face de l'élément voisin. Les plots coniques peuvent assurer à la fois le positionnement et le maintien en position assemblée de deux éléments d'âme adjacents, la conicité desdits plots étant calculée pour obtenir un effet de coincement.

L'embase inférieure présente un orifice central d'une section suffisante pour l'introduction de l'âme dans le volume cylindrique délimité par les bords internes des plis du média filtrant et cette embase comporte des languettes d'accrochage ayant une élasticité suffisante pour permettre l'introduction de l'âme à l'intérieur de ce volume cylindrique, et permettant un accrochage de l'âme par son bord inférieur.

Des cloisons transversales de renforcement avec des orifices de passage du liquide filtré, sont prévues dans le volume interne de l'âme, pour résister à une forte différence de pression entre l'extérieur et l'intérieur de la cartouche.

L'embase supérieure comporte avantageusement une poignée agencée pour une préhension aisée et pour l'exercice d'une force importante d'extraction. Cette poignée vient de moulage avec l'embase supérieure et dans la zone de jonction entre la poignée et l'embase, la section est amincie pour constituer une charnière ou articulation. La poignée peut ainsi occuper une position active relevée pour une bonne préhension et une position rabattue sur l'embase, afin de réduire l'encombrement en hauteur de la cartouche ou de l'embase.

D'autres avantages et caractéristiques ressortiront plus clairement de la description qui va suivre de différents modes de mise en oeuvre de l'invention donnés à titre d'exemples et représentés aux dessins annexés, dans lesquels:
la figure 1 est une vue en coupe suivant la ligne brisée 1-1 de la figure 2 d'une cartouche selon l'invention;
la figure 2 est une coupe suivant la ligne 2-2 de la figure 1;
la figure 3 est une vue en perspective d'un élément de la cartouche selon la figure 1;
la figure 4 est une vue partielle de la cartouche, montrant à gauche la poignée en position relevée et à droite la poignée en position rabattue.
les figures 5-7 et les figures 8-10 sont des vues analogues à celles des figures 1-3, illustrant respectivement une première et une deuxième variante de réalisation,

Les mêmes numéros de référence désignent des éléments analogues ou identiques sur les différentes figures.
Sur les figures une cartouche 10, notamment d'un filtre de traitement de fluide, par exemple de l'eau d'une piscine, est en forme de cylindre creux allongé, dont le fond supérieur est constitué par une embase 11, en forme de disque plein et le fond inférieur par une embase 12, en forme de disque ayant un trou central 13. Une âme 15 s'étend axialement entre les embases 11,12 sur toute la hauteur de la cartouche 10 et se raccorde au trou central 13, dont la section est plus grande. L'âme 15 soutient intérieurement un élément filtrant 14, en papier ou autre média plissé en accordéon, intercalé entre les deux embases 11,12 et entourant circonférentiellement l'âme 15.

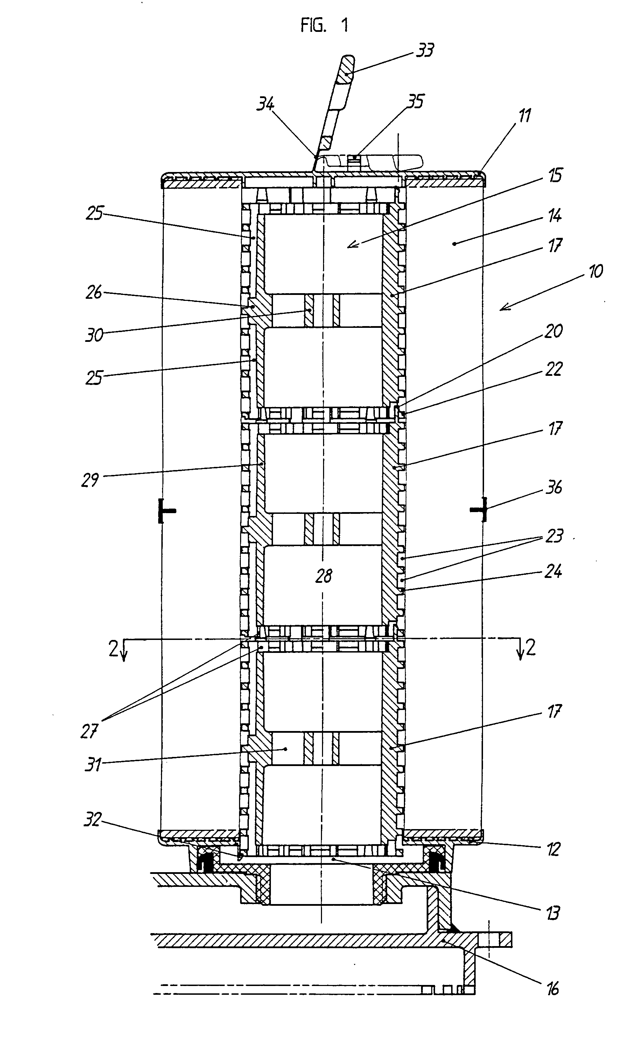

L'âme 15 est en matière plastique moulée rigide.
Les embases 11,12 sont, par exemple, en matière plastique et les extrémités des plis 18 du papier ou du média filtrant 14 sont collées aux embases 11,12. L'ensemble embases 11,12, média filtrant 14 et âme 15 constitue une cartouche de filtrage 10, bien connue, pouvant être introduite dans une cuve parcourue par le fluide à filtrer, dont seul le socle 16 est schématiquement représenté à la figure 1. Le fluide passe radialement à travers le média filtrant 14 de l'extérieur vers l'intérieur et s'écoule par l'âme 15 et le trou central 13. La cartouche 10 est retirée périodiquement de la cuve pour un nettoyage, notamment au jet sous pression.

L'âme 15 est constituée de trois éléments empilés 17, qui sont identiques et assemblés les uns aux autres, mais il est clair que l'âme 15 peut comporter un seul élément 17 ou un nombre différent d'éléments. Dans l'exemple illustré par les figures 1-4 l'assemblage des éléments 17 est réalisé par des plots coniques 19 et des crochets 20, portés par la face supérieure de l'élément 17, qui respectivement s'emboîtent dans des cavités conjuguées 21 et s'encliquettent sur des aspérités 22 de la face inférieure de l'élément 17 adjacent. La surface cylindrique externe de l'âme 15 présente une alternance de gorges circulaires 23 et de saillies circulaires 24, qui respectivement collectent le fluide traversant le média filtrant 14 et maintiennent ce dernier. Les gorges 23 et saillies 24 sont réparties régulièrement sur toute la hauteur de l'âme 15 et leurs dimensions sont choisies pour offrir au fluide filtré une section de passage suffisante et d'autre part pour éviter toute déformation excessive et pénétration dans les gorges 23, du média filtrant 14. Le fond des gorges 23 communiquent avec des lumières 25, en forme de canaux de direction axiale, ménagées dans la paroi tubulaire de l'âme 15. Dans l'exemple illustré par les figures 1-4, la section des lumières 25 est rectangulaire et les lumières 25 s'étendent sur toute la hauteur de chaque élément 17 de l'âme 15 en étant subdivisées en deux parties par une cloison centrale 26, l'une des parties débouchant vers l'extrémité supérieure de l'élément 17 et l'autre vers l'extrémité inférieure, où elles communiquent par des passages 27 avec le volume interne 28 de l'âme 15. Les lumières 25 et les gorges 23, pratiquées dans l'âme 15, laissent subsister une partie interne pleine 29 de la paroi, qui confère à l'âme 15 une grande rigidité et une résistance aux pressions. L'épaisseur de cette partie pleine 29 est, par exemple, d'environ 3 millimètres, du même ordre de grandeur que la profondeur des gorges 23 et des lumières 25. Ces dimensions dépendent bien entendu des matériaux du média filtrant 14 et de l'âme 15 et des conditions d'utilisation du filtre. Chaque élément 17 de l'âme 15 est renforcé par une cloison transversale 30, disposée au centre de l'élément 17 dans le volume interne 28 de l'âme 15. Ces cloisons 30 présentent des orifices 31 de passage du fluide filtré, qui s'écoule librement à travers l'âme 15 vers le trou central 13.

L'âme 15 est en matière plastique moulée, dont tous les éléments constitutifs 19-30 viennent de moulage et ne nécessitent aucun usinage. En empilant plusieurs éléments 17 il est possible de réaliser des filtres de hauteurs et donc de capacités de filtrage différentes. Après assemblage des éléments 17, par simple encliquetage des crochets 20, l'âme 15 est enfilée par le trou 13, de section supérieure, à l'intérieur du volume cylindrique confiné par les bords internes des plis 18 du média filtrant 14, lesquels plis 18 sont au contact des saillies 24. L'âme peut être maintenue en place par simple friction avec le média filtrant 14 ou de la manière illustrée par la figure 1, par des crochets 32, solidaires de l'embase inférieure 12, qui viennent accrocher le pourtour inférieur de l'âme 15 en fin de course d'insertion de l'âme 15. Ces crochets 32 retiennent normalement l'âme 15 en place, notamment pendant les opérations de nettoyage. Quand la cartouche est hors d'usage, on peut sans inconvénient détruire les crochets 32 par déformation ou arrachage et l'âme 15 peut ainsi être séparée des autres parties de la cartouche 10 et être récupérée. Ces autres parties, en l'occurrence le média filtrant 14 et les embases 11,12, sont relativement souples et peuvent être compactées pour la mise aux déchets.

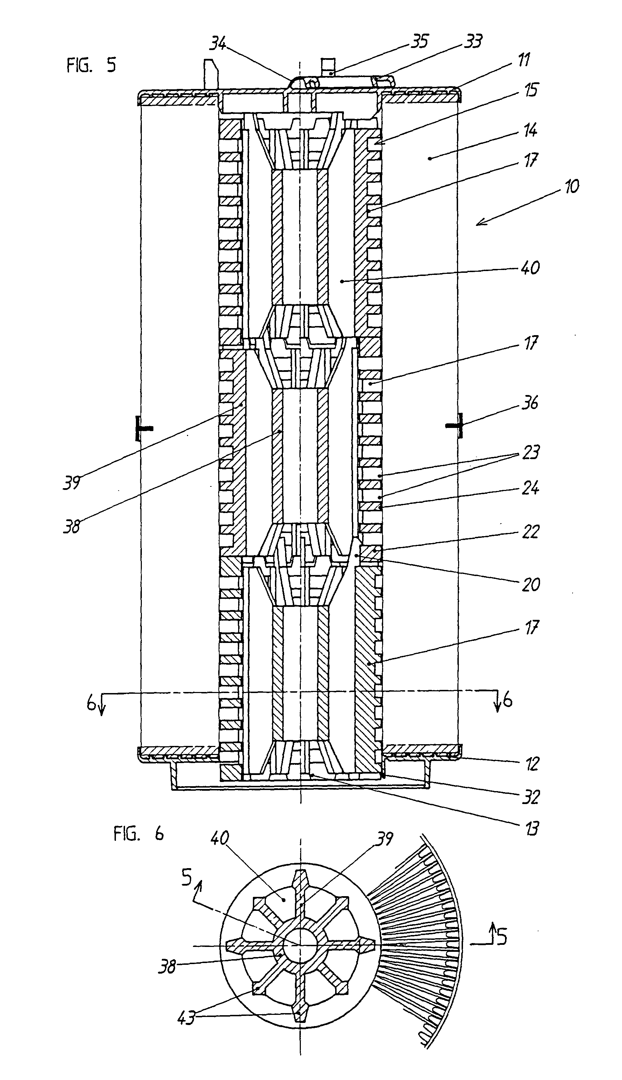

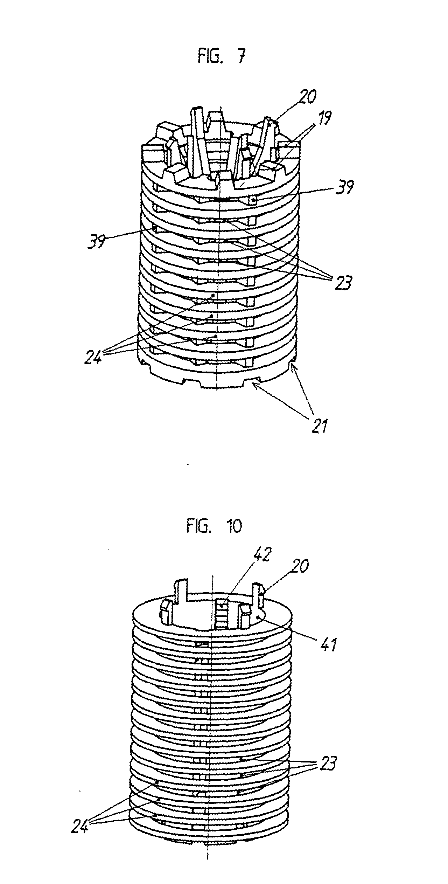

Selon une variante de réalisation, illustrée par les figures 5-7, les saillies circulaires 24, en forme d'anneaux, de l'âme 15 sont reliées à un tube central 38 par des ailettes radiales 39, réparties circonférentiellement autour de ce tube 38. Les canaux axiaux 40, confinés par les ailettes 39, communiquent avec le fond des gorges 23 pour un libre passage du fluide filtré. Les ailettes 39 s'étendent sur toute la longueur d'un élément d'âme 17, la longueur du tube central étant légèrement plus faible pour ménager des passages vers l'espace interne du tube 38. Les sections de passage du fluide sont importantes, l'ensemble conservant une grande rigidité. Les zones 43 de raccordement des ailettes 39 aux saillies circulaires 24 sont conçues pour assurer une bonne transmission des efforts longitudinaux de compression, et pour faciliter la réalisation de l'élément d'âme 17 au moyen d'un moule comportant deux tiroirs opposés.

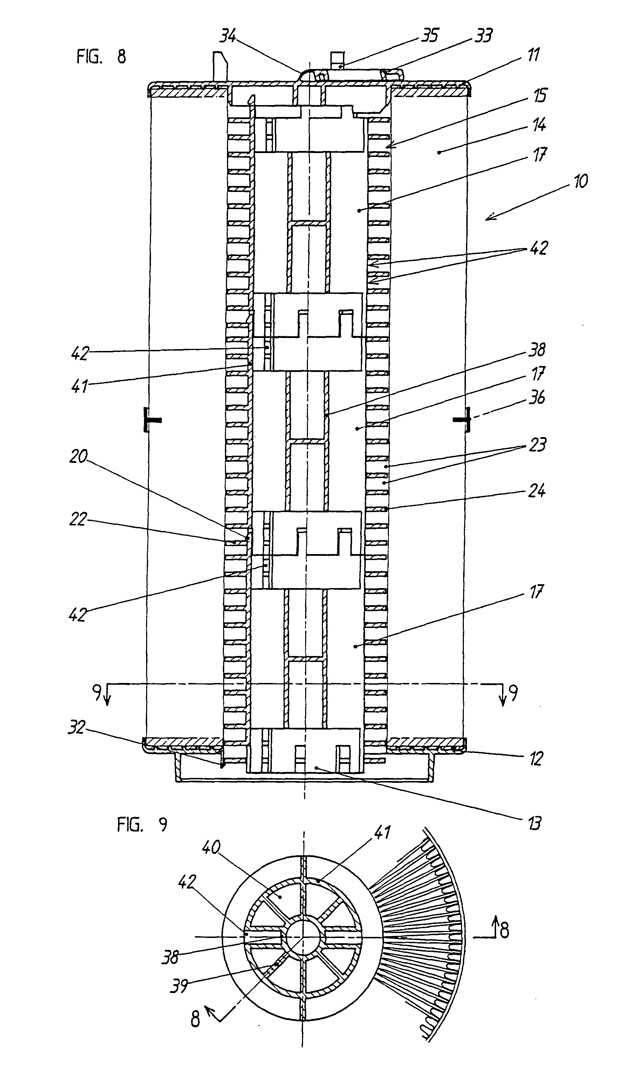

Selon une autre variante de réalisation, illustrée par les figures 8-10, les saillies circulaires 24, en forme d'anneaux, sont réparties sur le pourtour externe d'un cylindre creux 41, qui présente deux fentes longitudinales 42, ménageant un passage vers l'intérieur du cylindre 41. Des ailettes radiales 39, réparties à l'intérieur du cylindre 41, relient ce dernier à un tube central 38 de support. Les ailettes 39, qui encadrent les fentes 42, sont parallèles pour agrandir la section de passage du fluide filtré. La longueur des ailettes 39 et du tube central 38 est inférieure à celle de l'élément d'âme 17, pour un libre passage du fluide vers les canaux axiaux 40. Le cylindre 41 confère à l'ensemble une grande rigidité et il peut encaisser les efforts longitudinaux de compression.

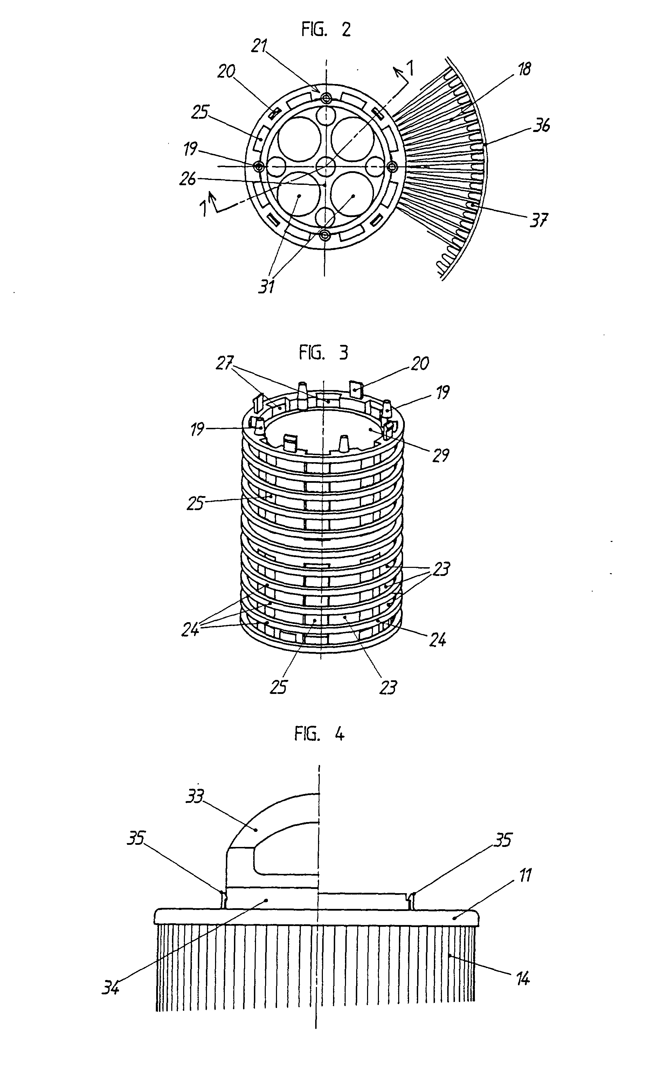

En se référant plus particulièrement à la figure 4 on voit que l'embase supérieure 11 porte une poignée 33 du type poignée de valise pour une bonne préhension, qui vient de moulage avec l'embase supérieure 11. Cette poignée 33 permet d'exercer sur les embases 11,12 et le média filtrant 14 une force importante d'extraction de l'âme 15, celle-ci étant maintenue, par exemple par un outil introduit dans le volume interne 28. La zone de jonction 34 de la poignée 33 et de l'embase 11 présente une section amincie, qui constitue une charnière. La poignée 33 peut ainsi être placée en position verticale active, représentée sur la partie gauche de la figure 4 et en position rabattue inactive, représentée sur la partie droite, afin de limiter l'encombrement en hauteur de la cartouche 10. Des languettes d'encliquetage 35, solidaires de l'embase 11, maintiennent la poignée 33 en position rabattue.

Le pourtour externe du média filtrant 14 est ceinturé par une couronne 36, dont la face interne porte des dents 37, qui pénètrent entre les plis 18. Le pas des dents 37 correspond à celui des plis 18 qui sont ainsi maintenus espacés. La couronne 36 n'est pas solidarisée au média filtrant 14 et elle peut être déplacée vers les embases 11,12 pour faciliter le nettoyage de la cartouche. Une telle couronne est décrite dans la demande de brevet français N° 94 13785 (FR-A-2 726 483, à laquelle on se référera avantageusement.

## Revendications

1. Cartouche de filtrage (10) cylindrique comportant une âme (15) centrale tubulaire, un média filtrant (14) en papier ou en un matériau analogue plissé, qui est disposé circonférentiellement autour de l'âme (15) en étant maintenu par cette âme, et des embases (11,12), indépendantes de l'âme, qui coiffent le fond supérieur et le fond inférieur du média filtrant (14) en l'encadrant, **caractérisée en ce que** l'âme (15) est en matière plastique moulée rigide, que le média filtrant (14) et les embases (11,12) sont solidarisés pour constituer un ensemble monobloc et que l'âme (15) est séparable de cet ensemble monobloc par un coulissement axial à travers un orifice central (13), ménagé dans l'embase inférieure (12) et ayant une section supérieure à celle de l'âme (15).

2. Cartouche selon la revendication 1, **caractérisée en ce que** l'âme tubulaire (15) présente à sa surface externe cylindrique, au contact du média filtrant (14), une alternance de gorges (23) circulaires de passage du fluide filtré et de saillies circulaires (24) de maintien du média filtrant (14), dimensionnées de façon que le média filtrant est maintenu sans pénétrer excessivement dans les gorges (23) sous l'action d'une différence de pression entre l'extérieur et l'intérieur de la cartouche (10) au cours du filtrage, et de façon que le coulissement axial entre le média filtrant (14) et l'âme (15) reste possible, même après utilisation de la cartouche.

3. Cartouche selon la revendication 1, ou 2, **caractérisée en ce que** l'âme centrale (15) est constituée par un empilage d'éléments (17) moulés en matière plastique, ayant des moyens (19,21;20,22) conjugués de positionnement et/ou d'encliquetage pour la réalisation d'âmes de longueurs différentes.

4. Cartouche selon la revendication 1,2 ou 3, **caractérisée en ce que** des lumières (25), en forme de canaux, sont pratiquées dans la paroi tubulaire de l'âme (15), que ces lumières (25) s'étendent en direction axiale et sont réparties régulièrement sur le pourtour de l'âme du côté du fond des gorges (23), en laissant subsister une partie pleine (29) de l'âme et que les gorges sont en communication avec les lumières pour le libre passage du fluide filtré des gorges (23) vers les lumières (25) et un écoulement axial à travers ces dernières.

5. Cartouche selon la revendication 4, **caractérisée en ce que** les lumières (25) communiquent avec le volume interne (28) de l'âme (15) par des passages (27), ménagés à l'interface de deux éléments adjacents (17) ou aux extrémités supérieure et inférieure de l'âme (15), pour l'échappement du fluide filtré à travers l'âme.

6. Cartouche selon l'une quelconque des revendication 1 à 3, **caractérisée en ce que** les saillies circulaires (24) à la surface externe de l'âme (15) sont reliées à un tube central (38) de support par des ailettes radiales (39), qui confinent des canaux axiaux (40) communiquant avec le fond des gorges (23).

7. Cartouche selon l'une quelconque des revendication 1 à 3, **caractérisée en ce que** les saillies circulaires (24) à la surface externe de l'âme (15) sont portées par un cylindre creux (41), ayant au moins une fente longitudinale (42) faisant communiquer le fond des gorges (23) avec l'intérieur du cylindre (41) et que des ailettes radiales (39) relient le cylindre (41) à un tube central (38) de support.

8. Cartouche selon la revendication 6, ou 7, **caractérisée en ce que** la longueur du tube central (38 est inférieure à celle de l'âme (15) ou de l'élément d'âme (17) pour créer une communication entre les canaux axiaux (40) confinés par les ailettes radiales (39).

9. Cartouche selon l'une quelconque des revendications précédentes, **caractérisée en ce que** l'embase inférieure (12) comporte des languettes d'accrochage (32) présentant une élasticité suffisante pour permettre l'introduction de l'âme (15) à l'intérieur du volume cylindrique confiné par le média filtrant (14), et pour permettre un accrochage de l'âme par son bord inférieur.

10. Cartouche selon l'une quelconque des revendications précédentes, **caractérisée en ce que** l'embase supérieure (11) comporte une poignée (33) venant de moulage avec l'embase et que la zone de jonction (34) de la poignée à l'embase présente une section amincie pour constituer une articulation, permettant à la poignée d'occuper soit une position de préhension, sensiblement perpendiculaire à l'embase , soit une position inactive rabattue.

## Claims

1. A cylindrical filter cartridge (10) comprising a central tubular core (15), a filter media (14) made of pleated paper or similar material, which is located circumferentially around the core (15) and maintained by said core, and end caps (11 ,12 ) which are independent with respect to the core, and located on the upper end and the lower end of the filter media (14),
**characterized in that** the core (15) is made of rigid moulded plastic material, that the filter media (14) is rigidly affixed to the ends caps (11, 12) to constitute one element, and that the core (15) is axially removable from this element through a central opening (13) located in the lower end cap (12), and having a section greater than the core (15) section.

2. A filter cartridge according to claim 1, **characterized in that** the outer cylindrical surface of the core (15) comprises in contact with the filter media (14) alternate circular grooves (23) for the passage of the filtered fluid, and circular ridges (24) arranged to maintain the filter media, to prevent any excessive penetration into the grooves (23) by the action of the differential outer and inner fluid pressure during filtering of the cartridge, and to permit axial sliding between the filter media (14) and the core (15), even after use of the cartridge.

3. A filter cartridge according to claim 1, **characterized in that** the central core (15) includes superimposed elements (17) moulded from plastic material, and having conjugate guiding and locking means to provide cores of different lengths.

4. A filter cartridge according to claim 1, 2, or 3, **characterized in that** the tubular wall of the core (15) comprises openings (25) having the shape of bores, and that these openings (25) extend in the axial direction, and are regularly spaced around the periphery of the core on the inner side of the grooves (23) so as to define a solid part (29) of the core, and that the grooves are in communication with the openings for the free passage and axial flow of the filtered fluid from the grooves (23) towards the openings (25).

5. A filter cartridge according to claim 4, **characterized in that** the openings (25) are in communication with the inner space (28) of the core (15) through outlets (27) which are located at the interface of two adjacent elements (17), or at the upper and lower extremities of the core (15) for the passage of the filtered fluid through the core.

6. A filter cartridge according to any one of the claims 1 to 3, **characterized in that** the circular ridges (24) located at the outer face of the core (15) are secured to a central tube (38) by radial wings (39) which define axial passage ways (40) in communication with the bottom of the grooves (23).

7. A filter cartridge according to any one of the claims 1, to 3, **characterized in that** the circular ridges (24) located at the outer face of the core (15) are borne by a hollow cylinder (41), having at least a longitudinal slit (42) providing a communication between the bottom of the grooves (23) and the inner of the cylinder (41), and that radial wings (39) secure the cylinder (41) to a central support tube (38).

8. A filter cartridge according to claim 6 or 7, **characterized in that** the length of the central tube (38) is shorter than the length of the core (15) or of the core element (17), to provide a communication between the axial conduits (40) defined by the radial wings (39).

9. A filter cartridge according to any one of the previous claims, **characterized in that** the lower end cap (12) comprises locking tabs (32) having sufficient elasticity for engaging the core (15) inside the cylindrical space of the filter media, and for locking the core at the lower edge.

10. A filter cartridge according to any one of the previous claims, **characterized in that** the upper end cap (11) comprises a handle (33) moulded from plastic with the end cap, and that the junction zone (34) between the handle and the cap has reduced section to provide a hinge for enabling the handle to be either in a working position extending nearly perpendicularly to the end cap, or in an inactive retracted position.

## Patentansprüche

1. Zylindrischer Patronenfilter (10), der einen zentralen, rohrartigen Dorn (15) aufweist, ein Filtermedium (14) aus Papier oder aus einem ähnlichen gefalteten Material, das kreisförmig um den Dorn (15) angeordnet ist und dabei von diesem Dorn gehalten wird, und Ansätze (11, 12), die von dem Dorn unabhängig sind und den oberen und den unteren Boden des Filtermediums (14) einrahmend bedecken, **dadurch gekennzeichnet, dass** der Dorn (15) aus einem starren gegossenen Plastik-Material besteht, dass das Filtermedium (14) und die Ansätze (11, 12) verbunden sind, um ein Monoblock-Ensemble zu bilden, und **dass** der Dorn (15) von diesem Monoblock-Ensemble getrennt werden kann durch ein axiales Gleiten durch eine zentrale Öffnung (13), die in dem unteren Ansatz (12) angeordnet ist und einen Durchschnitt aufweist, der grösser ist als der des Dorns (15).

2. Patrone gemäss dem Patentanspruch 1, **dadurch gekennzeichnet, dass** der rohrartige Dorn (15) auf seiner äusseren zylindrischen Oberfläche, am Kontakt mit dem Filtermedium (14), abwechselnd kreisförmige Auskehlungen (23) zum Durchlauf der gefilterten Flüssigkeit und kreisförmige Vorsprünge (24) zum Halten des Filtermediums (14) aufweist, die derart dimensioniert sind, **dass** das Filtermedium erhalten bleibt, ohne übermässig in die Auskehlungen (23) einzudringen, beim Auftreten eines Druckunterschiedes zwischen dem Äusseren und dem Inneren der Patrone (10) während des Filterns, und derart, **dass** das axiale Gleiten zwischen dem Filtermedium (14) und dem Dorn (15) möglich bleibt, auch nach Gebrauch der Patrone.

3. Patrone gemäss dem Patentanspruch 1 oder 2, **dadurch gekennzeichnet, dass** der zentrale Dorn (15) von einer Aufstapelung aus Plastik-Material gegossener Elemente (17) gebildet wird, welche konjugierte Positionierungs- und/oder Einrastmittel (19, 21 ; 20, 22) aufweisen zur Ausführung von Dornen mit verschiedenen Längen.

4. Patrone gemäss dem Patentanspruch 1, 2 oder 3, **dadurch gekennzeichnet, dass** Öffnungen (25) in Form von Kanälen, in der rohrartigen Wand des Dorns (15) ausgeführt sind, dass sich diese Öffnungen (25) in axialer Richtung erstrecken und regelmässig um den Dorn herum verteilt sind auf der Seite des Bodens der Auskehlungen (23), und dabei einen vollen Teil (29) des Dorns bestehen lassen, und **dass** die Auskehlungen mit den Öffnungen in Verbindung sind für den freien Durchfluss der gefilterten Flüssigkeit von den Auskehlungen (23) zu den Öffnungen (25) und einen axialen Abfluss durch letztere.

5. Patrone gemäss dem Patentanspruch 4, **dadurch gekennzeichnet, dass** die Öffnungen (25) mit dem inneren Volumen (28) des Dorns (15) durch Passagen (27) in Verbindung stehen, die am Zwischenstück von zwei aneinandergrenzenden Elementen (17) oder an dem oberen und unteren Ende des Dorns (15) vorgesehen sind, zum Austreten der gefilterten Flüssigkeit durch den Dorn.

6. Patrone gemäss irgendeinem der Patentansprüche 1 bis 3, **dadurch gekennzeichnet, dass** die kreisförmigen Vorsprünge (24) an der äusseren Oberfläche des Dorns (15) durch radiale Flügel (39) mit einem zentralen Trag-Rohr (38) verbunden sind, welche die axialen Kanäle (40) begrenzen, die mit dem Grund der Auskehlungen (23) verbunden sind.

7. Patrone gemäss irgendeinem der Patentansprüche 1 bis 3, **dadurch gekennzeichnet, dass** die kreisförmigen Vorsprünge (24) an der äusseren Oberfläche des Dorns (15) von einem hohlen Zylinder (41) getragen werden, der mindestens einen länglichen Schlitz (42) aufweist, der den Grund der Auskehlungen (23) mit dem Innern des Zylinders (41) verbindet, und **dass** die radialen Flügel (39) den Zylinder (41) mit einem zentralen Trag-Rohr (38) verbinden.

8. Patrone gemäss Patentanspruch 6 oder 7, **dadurch gekennzeichnet, dass** die Länge des zentralen Rohrs (38) geringer ist als die des Dorns (15) oder des Dorn-Elements (17), um eine Verbindung zwischen den von den radialen Flügeln (39) begrenzten axialen Kanälen (40) zu schaffen.

9. Patrone gemäss einem der vorhergehenden Patentansprüche, **dadurch gekennzeichnet, dass** der untere Ansatz (12) Aufhängezungen (32) aufweist, die eine ausreichende Elastizität besitzen, um die Einführung des Dorns (15) ins Innere des durch das Filtermedium (14) begrenzte zylindrische Volumen zu erlauben, und um ein Aufhängen des Dorns an seinem unteren Rand zu erlauben.

10. Patrone gemäss irgendeinem der vorhergehenden Patentansprüche, **dadurch gekennzeichnet, dass** der obere Ansatz (11) einen mit dem Ansatz gegossenen Griff (33) aufweist, und **dass** die Verbundzone (34) des Griffs mit dem Ansatz einen verdünnten Abschnitt aufweist, um ein Gelenk zu bilden, das es dem Griff erlaubt, entweder eine Greif-Position einzunehmen, annähernd senkrecht zum Ansatz, oder eine inaktive zurückgeklappte Position einzunehmen.
